Europäisches Patentamt

European Patent Office

Office européen des brevets

(19)

(11) Veröffentlichungsnummer: **0 264 395 B1**

(12) # EUROPÄISCHE PATENTSCHRIFT

(45) Veröffentlichungstag der Patentschrift:
13.03.91 Patentblatt 91/11

(51) Int. Cl.⁵ : **B32B 7/14, B65D 75/10**

(21) Anmeldenummer: 87902309.1

(22) Anmeldetag: 24.04.87

(86) Internationale Anmeldenummer:
PCT/AT87/00031

(87) Internationale Veröffentlichungsnummer:
WO 87/06525 05.11.87 Gazette 87/24

(54) VERBUNDFOLIE FÜR VERPACKUNGSZWECKE SOWIE DEREN VERWENDUNGEN.

(30) Priorität: 24.04.86 AT 1095/86

(43) Veröffentlichungstag der Anmeldung:
27.04.88 Patentblatt 88/17

(45) Bekanntmachung des Hinweises auf die
Patenterteilung:
13.03.91 Patentblatt 91/11

(84) Benannte Vertragsstaaten:
AT BE CH DE FR GB IT LI NL SE

(56) Entgegenhaltungen:
FR-A- 779 291
GB-A- 993 981
GB-A- 999 885
GB-A- 1 194 706

(73) Patentinhaber: TEICH
AKTIENGESELLSCHAFT
Weinburg-Mühlhofen 4
A-3200 Obergrafendorf (AT)

(72) Erfinder : JUD, Wilfried
Schubertstrasse 23
A-3200 Obergrafendorf (AT)
Erfinder : MANNERTORP, Wilhelm
Täppvägen 3A
S-132 00 Saltsjoe-Boo (SE)
Erfinder : REITERER, Franz
Brodpragersiedlung Neubau
A-3052 Innermanzing (AT)
Erfinder : GNADENBERGER, Alfred
Wantendorf
A-3200 Obergrafendorf (AT)

(74) Vertreter : Stampfer, Heinz
ISOVOLTA Österreichische Isolierstoffwerke
AG Industriezentrum-Süd
A-2351 Wiener Neudorf (AT)

## Beschreibung

Die Erfindung betrifft eine als Zuschnitte zu verarbeitende Verbundfolie für Verpackungszwecke, die aus zwei unterschiedlichen Folienlagen besteht, von denen zumindest eine eine Aluminiumfolie oder ein Papier enthält, wobei die Folienlagen über eine Verbindungsfläche, die aus mehreren voneinander getrennten Teilbereichen besteht, miteinander verbunden sind.

Eine Verbundfolie dieser Art ist aus der FR-A-779 291 bekannt, welche aus zwei unterschiedlichen flächigen Materialien, nämlich einem "harten" und "einem" weichen Material besteht, die z.B. an nach einem quadratischen Raster angeordneten Punktflächen miteinander verbunden sind. Dabei soll die Tendenz vermieden werden, daß das Verbundmaterial sich gegenüber seinem Zustand, den es im Augenblick der Verbindung der beiden flächigen Materialien eingenommen hat, verformt. Durch welche Einflüsse eine solche Verformung entstehen soll, wird dabei nicht näher erläutert.

Es wurde nun gefunden, daß eine Rollneigung, wie nachstehend erläutert, auch aus besonderen nicht naheliegenden Gründen entstehen kann.

Ist nämlich solche Verpackungsfolie in Form eines Verbundmaterials aus mehreren Schichten aufgebaut, so werden bei der Herstellung der als Endlosbahn erzeugten Verbundfolie in vielen Fällen während des Herstellungsprozesses zwei Folienbahnen, von denen jede für sich bereits aus einem Teilverbund bestehen kann, durch Kaschierung verbunden. Dabei werden die beiden Folienbahnen jeweils mit einer solchen Zugspannung durch die Kaschiermaschine gezogen, daß die Reibungsverluste überwunden werden. Die beiden Folienbahnen werden also miteinander verbunden, während sie unter einer nicht unbeträchtlichen Zugspannung stehen und dabei in vielen Fällen unterschiedlich stark elastisch gedehnt sind. Nach Fortfall der Zugspannungen schrumpfen die Folienbahnen dann auch unterschiedlich, was zu einer Rollneigung der Verbundfolie um eine Achse quer zur Endlosbahnlängserstrekkung führt, die sich insbesondere darin auswirkt, daß die Verbundfolienzuschnitte von selbst nicht mehr plan auf einer ebenen Unterlage aufliegen. Ein solcher Verbundfolienzuschnitt kann dann nicht oder nur unter besonderen Vorkehrungen in der Verpackungsmaschine weitertransportiert und/oder bestimmungsgemäß zu einer Packung geformt werden.

Es kann aber auch eine Rollneigung der Verbundfolien mit einer Achse parallel zur Endlosbahnlängserstreckung eintreten. Dies ist z.B. der Fall, wenn eine der beiden Folienbahnen im wesentlichen aus feuchtigkeitsempfindlichem Material wie Papier besteht, dessen Fasern bei der Verbundfolienherstellung durch Aufnahme oder Abgabe von Feuchtigkeit sich in ihrer Dimension verändern und so eine Ausdehnung oder Schrumpfung dieser Papier-Folienbahn quer zu ihrer längserstreckung bewirken.

Eine besondere Art der Einschlagverpackungen sind die sogenannten Twistverpackungen für relativ kleine Verpakkungsgutstücke wie Bonbons. Zur Herstellung der Twistverpackung wird z.B. das Bonbon in der Verpackungsmaschine in den Verpackungsmaterial-Zuschnitt so eingeschlagen, daß dieser eine als Tubus bezeichnete Hülse bildet, deren überstehende Enden dann eingedreht werden. Ein bekanntes Twistverpackungsmaterial für höherwertige Bonbons besteht z.B. aus einer 20-23 μm starken Zellglasfolie, die einseitig metallisiert und mit einem Dekordruck versehen ist. Twistverpackungen, die aus einer solchenZellglasfolie hergestellt sind, haben die Eigenschaft, daß – wegen der geringen Rückstellkräfte des Zellglasmaterials – die eingedrehten Enden der Twistverpackung sich später nicht oder nur in einem sehr geringen Ausmaß wieder aufdrehen. Statt einer Zellglasfolie können für solche Twistverpackungen auch Spezialpapiere eingesetzt werden. Vorteilhaft werden auch zweibahnige Twistverpakkungen verwendet, welche z.B. aus einer schmäleren Aluminiumfolie einer Stärke von 8-12 μm zum Füllgut hin und einer lose darüberliegenden bedruckten breiteren Kunststoffolie bestehen. Die beidseitig über die Aluminiumfolie überstehenden Bereiche der Kunststoffolie werden dann eingedreht. Eine Verbundfolie z.B. bestehend aus einer mit einer Aluminiumfolie vollflächig kaschierten Kunststofffolie könnte z.B. an sich als Verpackungsmaterial für Twistverpackungen dienen ; wegen der weiter oben erläuterten Rollneigung der aus einer solchen Verbundfolie hergestellten Zuschnitte sind diese für einen Einsatz in Twistverpackungsmaschinen nur bedingt geeignet.

Twistverpackungen, die mit Hilfe von Zuschnitten eines Verbundmaterials hergestellt werden, sind aus der GB-A-993.981 bekannt. Dieses Verbundmaterial besteht aus einer Polypropylenfolie, die mit einer Papierlage oder einer Aluminiumfolie in jenen zwei streifenförmigen Bereichen verbunden ist, welche beim Herstellen der Twistverpackung eingedreht werden. Ein Zuschnitt dieses Verbundmaterials, dessen beide Komponenten gerade an den Zuschnitt-Rändern nicht miteinander verbunden sind, neigt jedoch zu einer Delaminierung an diesen Rändern, was – wie gefunden wurde – sich bei der Handhabung des Zuschnitts in der Verpackungsmaschine sehr störend auswirken kann.

Hier will die Erfindung Abhilfe schaffen. Die Erfindung, wie sie in den Ansprüchen 1 bis 9 gekennzeichnet ist, löst die Aufgabe, eine Verbundfolie der eingangs genannten Art anzugeben, die als Zuschnitt keine Rollneigung zeigt, die nun aber als Endlosbahn hergestellt und für Twistverpackungen verwendbar ist und eine geringe Tendenz zur Delaminierung hat.

Die Erfindung betrifft ferner gemäß den Ansprüchen 10 bis 12 vorteilhafte Verwendungen der Zuschnitte der erfindungsgemäßen Verbundfolie.

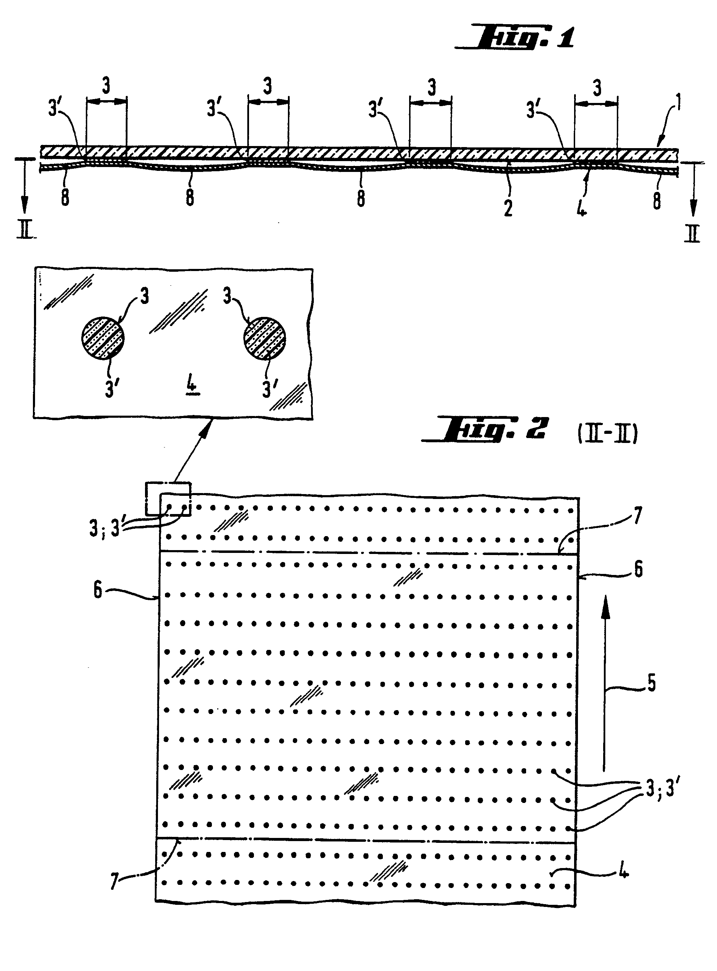

Die Herstellung einer Verbundfolie aus zwei durch Punktkaschierung miteinander verbundenen Folienbahnen sei nun anhand der Figuren 1 und 2 beschrieben.

Fig. 1 dabei zeigt schematisch im Querschnitt den Aufbau einer Verbundfolie, die dazu bestimmt ist, in Form von Zuschnitten zur Herstellung von Twistverpackungen verwendet zu werden, wobei die einzelnen Verbundfolienlagen zur besseren Übersichtlichkeit übertrieben dick dargestellt sind.

Fig. 2 zeigt im Schnitt nach der Ebene II-II der Fig. 1 einen Abschnitt der als Endlosbahn hergestellten Verbundfolie etwa im Maßstab 1 : 1 ; links ist eine Partial-Vergrößerung im Maßstab 10 : 1 dargestellt.

Die in Fig. 1 im Querschnitt gezeigte Verbundfolie besteht gemäß einem vorteilhaften Beispiel aus einer 15-30 µm starken Folie 1 aus biaxial gerecktem Polypropylen (OPP), welche an ihrer Rückseite 2 mit einem dekorativen Aufdruck, d.h. mit einem sogenannten Konterdruck versehen und innerhalb einer Verbindungsfläche, die aus kreisförmigen Teilbereichen 3 besteht, mit einer 7 µm starken Aluminiumfolie 4 durch Kaschierung verbunden ist. Anstelle der Aluminiumfolie kann auch vorteilhaft ein Papier z.B. mit einem Flächengewicht von 95 g/m² verwendet werden.

Die Flächen der Zuschnitte, die später als Verpackungsmaterial für Twistverpackungen z.B. für Bonbons verwendet werden sollen, sind, wie in Fig. 2 dargestellt, jeweils durch die beiden in Richtung 5 der Endlosbahnlängserstreckung verlaufenden Ränder 6 der Verbundfolie und durch senkrecht dazu verlaufende gedachte linien 7 begrenzt. Fig. 2 zeigt ferner die Anordnung der kreisförmigen Verbindungsflächen-Teilbereiche 3, die einen Durchmesser von ca. 1 mm haben und längs einem Rechtecks-Raster angeordnet sind. Der Flächenanteil der Teilbereiche 3 an der ganzen Endlosbahnfläche beträgt dabei ca. 3,2%.

Zur Herstellung der Verbundfolie wird in einer Kaschiermaschine die als Endlosbahn zugeführte Aluminiumfolie 4 gemäß dem in Fig. 2 gezeigten Muster innerhalb der kreisförmigen Teilbereiche 3 mit einem Bindemittelauftrag 3' (siehe Fig. 1) z.B. auf Polyurethanbasis versehen und mit der ebenfalls als Endlosbahn zulaufenden, bereits bedruckten OPP-Folie 1 kaschiert. Im Augenblick der Verbindung der beiden Endlosbahnen ist z.B. die DPP-Folie 1 aufgrund der Spannungsverhältnisse in der Kaschiermaschine wegen ihres geringeren E-Moduls stärker gedehnt als die Aluminiumfolie 4, so daß – wenn nach erfolgter Kaschierung die beiden Folien wieder in ihren jeweiligen Ausgangszustand zurückgehen – die OPP-Folie 1 stärker schrumpft als die Aluminiumfolie 4. Dies wirkt sich dann so aus, daß außerhalb der Teilbereiche 3 sich die Aluminiumfolie 4 in Form von sehr flachen Blasen 8, die in Fig. 1 zur besseren Deutlichkeit übertrieben hoch dargestellt sind, von der OPP-Folie 1 abhebt. Aus dieser Verbundfolie hergestellte Zuschnitte haben nun keine Rollneigung.

Die kaschierten Teilbereiche können die verschiedensten Formen haben. Wichtig ist jedoch, daß zumindest über den größten Teil der Endlosbahnbreite die in Richtung parallel und senkrecht zur Endlosbahnlängserstreckung bestimmten nicht unterbrochenen längenabmessungen der Teilbereiche jeweils klein im Verhältnis zur Endlosbahnbreite sind. Der durch die unterschiedliche Schrumpfung bedingte "Spannungseffekt" und die Rollneigung der Verbundfolie werden dann weitgehend vermieden.

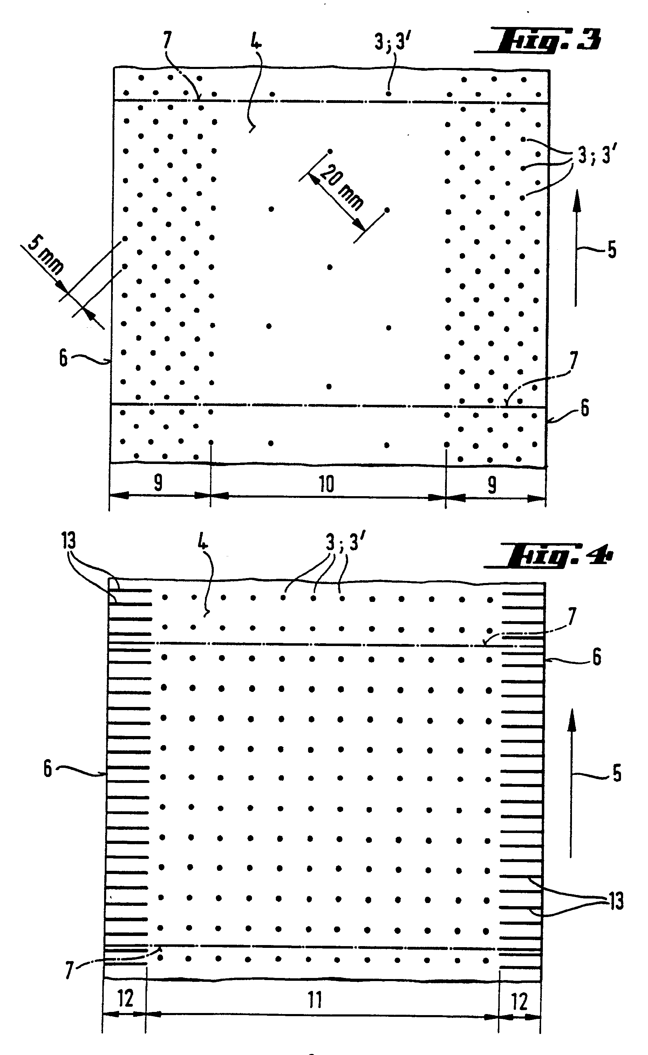

Die Erfindung wird nachstehend anhand von zwei Varianten der erfindungsgemäßen Verbundfolie gemäß den Figuren 3 und 4 näher beschrieben.

In Fig. 3 wird entsprechend der Schnittführung II-II in Fig. 1 ein Abschnitt der als Endlosbahn hergestellten Verbundfolie gemäß einer ersten Variante der Erfindung gezeigt.

In Fig. 4 stellt entsprechend der Schnittführung II-II in Fig. 1 einen Abschnitt einer weiteren Variante der Endlosbahn gemäß Fig. 3 dar.

Bei der Variante gemäß Fig. 3 umfaßt die durch die Ränder 6 der Endlosbahn und die senkrecht dazu verlaufenden gedachten linien 7 begrenzte Zuschnittsfläche drei in Richtung 5 verlaufende streifenförmige Bereiche, nämlich zwei an die Ränder 6 anschließende Randbereiche 9 und einen dazwischenliegenden Zentralbereich 10. Die kreisförmigen Verbindungsflächen-Teilbereiche 3, die einen Durchmesser von ca. 1 mm haben, sind längs quadratischen Rastern angeordnet, wobei die Rasterteilung in den beiden Randbereichen 5 mm und im Zentralbereich 20 mm beträgt. Daraus ergibt sich, daß jeweils in den beiden Randbereichen 9 der Anteil der kaschierten Teilbereiche 3 an der Randbereichsfläche das 16-fache des im Zentralbereich 10 vorgesehenen Anteils der Teilbereiche 3 an der Zentralbereichsfläche ist. Die aus dieser Endlosbahn hergestellten Zuschnitte haben insbesondere bei ihrer Verwendung als Verpackungsmaterial einer Twistpackung folgende Vorteile. Einerseits reicht nämlich die höhere Dichte der kaschierten Teilbereiche 3 in den beiden Randbereichen 9, in welchen bei der späteren Twistpackung die eingedrehten Zuschnittsränder zu liegen kommen, aus, um eine Delaminierung des Zuschnitts an den Zuschnittsrändern 6 zu vermeiden, während andererseits der Zentralbereich 10, der bei der Twistverpackung die Bonbonoberfläche bis zu den Stellen, an denen die eingedrehten Enden ansetzen, vollständig und überlappend bedeckt, praktisch eine glatte Oberfläche hat, was den ästhetischen Eindruck der Packung erhöht. Dies ist besonders auch dann der Fall, wenn gemäß einer (in den Figuren nicht gezeigten) Variante der Verbundfolie gemäß Fig. 3 die beiden Folienbahnen im Zentralbereich überhaupt nicht miteinander verbunden sind.

Es wurde gefunden, daß es vorteilhaft ist, wenn die mittlere Breite der Randbereiche 9 mindestens 10 mm beträgt. Außerdem hat sich gezeigt, daß, wenn in den Randbereichen der Anteil der Verbindungsflächen-Teilbereiche an der Randbereichsfläche zu hoch wird, die Oberfläche der die flachen Blasen 8 bildenen Folie, z.B. also die Aluminiumfolie gemäß Fig. 1, ein unschön geknittertes Aussehen erhält. Aus diesem Grunde wird dieser Anteil in vielen Fällen vorteilhaft höchstens 75% betragen.

Bei der Variante der Endlosbahn gemäß Fig. 4 sind in einem Zentralbereich 11 kreisförmige VerbindungsflächenTeilbereichen 3 und in den beiden Randbereichen 12 senkrecht zur Richtung 5 der Endlosbahnlängserstreckung verlaufende strichförmige Verbindungsflächen-Teilbereiche 13 vorgesehen. Diese spezielle Art der partiellen Kaschierung hat den Vorteil, daß in den Randbereichen ein eventuelles Knicken des Zuschnitts um eine parallel oder schräg zur Richtung 5 verlaufende linie und damit eine unerwünschte Faltenbildung des Materials kaum zu befürchten ist. Ein solches Knicken erfolgt nämlich hauptsächlich entlang von geradlinigen Streifen der Zuschnittsfläche, die frei von Verbindungsmaterial-Teilbereichen 8 bzw. 3 sind. Durch diese Art der Kaschierung wird also eine Faltung senkrecht zur Endlosbahnlängserstreckung erleichtert, wodurch die Herstellung des Folien-Tubus, welche vor dem eigentlichen Twistvorgang erfolgt, in vorteilhafter Weise unterstützt wird.

Außer für Twistverpackungen können Zuschnitte aus der erfindungsgemäßen Verbundfolie ganz allgemein auch vorteilhaft als Verpackungsmaterial für Einschlag- oder Einwickelverpackungen verwendet werden. In einer anderen vorteilhaften Verwendung können solche Zuschnitte als Etiketten gebraucht werden, wie man sie z.B. auf Flaschen aufklebt.

## Ansprüche

1. Als Zuschnitte zu verarbeitende Verbundfolie für Verpackungszwecke, die aus zwei unterschiedlichen Folienlagen besteht, von denen zumindest eine eine Aluminiumfolie oder ein Papier enthält, wobei die Folienlagen über eine Verbindungsfläche, die aus mehreren voneinander getrennten Teilbereichen besteht, miteinander verbunden sind, dadurch gekennzeichnet, daß die Verbundfolie aus zwei Folienbahnen erzeugt ist, wobei die Zuschnitte die Breite der Verbundfolien-Endlosbahn einnehmen, und daß die Flächen der späteren Zuschnitte jeweils einen Zentralbereich (10, 11) und an den Zuschnittsflächenrand angrenzende Randbereiche (9, 12) aufweisen, wobei jeweils in diesen Randbereichen (9, 12) der Anteil der Verbindungsfläche an der Randbereichsfläche (9, 12) größer als der innerhalb des Zentralbereichs (10, 11) bestehende Anteil der Verbindungsfläche an der Zentralbereichsfläche ist.

2. Verbundfolie nach Anspruch 1, dadurch gekennzeichnet, daß die Randbereiche (9, 12) an den in Endlosbahnlängserstreckung verlaufenden Zuschnittsrändern vorgesehen sind.

3. Verbundfolie nach Anspruch 1 oder 2, dadurch gekennzeichnet, daß die jeweils andere der Folienbahnen zumindest überwiegend aus biaxial gerecktem Polypropylen oder aus Zellglas besteht.

4. Verbundfolie nach einem der Ansprüche 1 bis 3, dadurch gekennzeichnet, daß die Verbindungsfläche höchstens 50% der Endlosbahnfläche beträgt.

5. Verbundfolie nach Anspruch 4, dadurch gekennzeichnet, daß die Verbinbungsfläche höschstens 5% der Endlosbahnfläche beträgt.

6. Verbundfolie nach einem der Ansprüche 1 bis 5, gekennzeichnet durch Randbereiche (9, 12) der Zuschnittsläche, in welchen jeweils der Anteil der Verbindungfläche an der Randbereichsfläche (9, 12) mindestens das 5-fache des innerhalb des Zentralbereichs (10, 11) bestehende Anteils der Verbindungsfläche an der Zentralbereichsfläche beträgt.

7. Verbundfolie nach Anspruch 6, dadurch gekennzeichnet, daß der Anteil der Verbindungsfläche an der Randbeireichsfläche (9, 12) mindestens das 10-fache des innerhalb des Zentralbereichs (10, 11) bestehenden Anteils der Verbindungsfläche an der Zentralbereichsfläche beträgt.

8. Verbundfolie nach Anspruch 6 oder 7, dadurch gekennzeichnet, daß die beiden Folienbahnen im Zentralbereich nicht miteinander verbunden sind.

9. Verbundfolie nach einem der Ansprüche 1 bis 8, dadurch gekennzeichnet, daß in den Randbereichen (9, 12) der Zuschnittsfläche jeweils der Anteils der Verbindungsfläche an der Randbereichsfläche höchstens 75% beträgt.

10. Verbundfolie nach einem der Ansprüche 1 bis 9, gekennzeichnet durch Randbereiche (9, 12) der Zuschnittsfläche deren mittlere Breiten jeweils mindestens 10 mm betragen.

11. Verbundfolie nach einem der Ansprüche 1 bis 10, dadurch gekennzeichnet, daß der Zentralbereich (10, 11) der Zuschnittfläche solche Abmessungen hat, daß bei einer Verwendung des Verbundfolien-Zuschnitts für festes, stückiges Verpackungsgut dieser Zentralbereich (10, 11) geeignet ist, bei einer Packung zumindest den größten Teil der Oberfläche oder einer Oberflächenseite des Verpackungsgutes zu bedecken.

12. Verwendung eines Zuschnittes aus einer Verbundfolie gemäß einem der Ansprüche 1 bis 11, dadurch gekennzeichnet, daß er zur Herstellung von Einschalg- oder Einwickelverpackungen verwendet wird.

13. Verwendung nach Anspruch 12, dadurch gekennzeichnet, daß er zur Herstullung einer Twistverpackung verwendet wird.

14. Verwendung eines Zuschittes aus einer Verbundfolie gemäß einem der Ansprüche 1 bis 10, dadurch gekennzeichnet, daß er als Etikett verwendet wird.

## Claims

1. Composite foil for packing purposes which is to be processed as blanks, which consists of two different foil layers, of which at least one contains an aluminium foil or a paper, with the foil layers being connected together by a connecting surface which consists of a plurality of partial areas separated from each other, characterised in that the composite foil is made from two foil webs, with the blanks taking on the width of the endless web of composite foil, and that the surfaces of the later blanks each have a central area (10, 11) and edge areas (9, 12) adjoining the edge of the blank surface,whereby in these edge areas (9, 12) each time the proportion of the connecting surface on the edge area surface (9, 12) is greater than the proportion of the connecting surface on the central area surface existing within the central area (10, 11).

2. Composite foil according to Claim 1, characterised in that the edge areas (9, 12) are provided on the edges of the blank extending in the longitudinal direction of the endless web.

3. Composite foil according to Claim 1 or 2,characterised in that the other one of the foil webs in each case consists at least predominantly of biaxially stretched polypropylene or of transparent foil.

4. Composite foil according to one of Claims 1 to 3, characterised in that the connecting surface is at most 50% of the endless web surface.

5. Composite foil according to Claim 4, characterised in that the connecting surface is at most 5% of the endless web surface.

6. Composite foil according to one of Claims 1 to 5, characterised by edge areas (9, 12) of the blank surface in which in each case the proportion of the connecting surface on the edge area surface (9, 12) is at least 5 times the proportion of the connecting surface on the central area surface existing within the central area (10, 11).

7. Composite foil according to Claim 6, characterised in that the proportion of the connecting surface on the edge area surface (9, 12) is at least 10 times the proportion of the connecting surface on the central area surface existing within the central area (10, 11).

8. Composite foil according to Claim 6 or 7, characterised in that the two foil webs are not connected together in the central area.

9. Composite foil according to one of Claims 1 to 8, characterised in that in the edge areas (9, 12) of the blank surface in each case the proportion of the connecting surface on the edge area surface is at most 75%.

10. Composite foil according to one of Claims 1 to 9, characterised by edge areas (9, 12) of the blank surface, the average widths of which are at least 10 mm in each case.

11. Composite foil according to one of Claims 1 to 10, characterised in that the central area (10, 11) of the blank surface has dimensions such that if the composite foil blank is used for solid pieces of packaging items this central area (10, 11) is suitable for covering in a package at least the major part of the surface or a surface side of the packaging items.

12. Use of a blank made of a composite foil according to one of Claims 1 to 11, characterised in that it is used for producing folded or wrapped packages.

13. Use according to Claim 12, characterised in that it is used for producing a twist package.

14. Use of a blank made of a composite foil according to one of Claims 1 to 10, characterised in that it is used as a label.

## Revendications

1. Feuille composite pour emballage, à façonner en flans, composée de deux couches de feuille différentes dont au moins l'une contient une feuille d'aluminium ou du papier, les couches de feuille étant reliées par l'intermédiaire d'une surface de liaison formée de plusieurs zones partielles séparées les unes des autres, caractérisée en ce qu'elle est produite à partir de deux bandes de feuilles, les flans ayant la largeur de la bande continue de feuilles composites, et en ce que les surfaces des flans façonnés présentent chacun une zone centrale (10, 11) et des zones de bordure (9, 12) limitrophes du bord de la surface du flan, la proportion de surface de liaison sur la surface de zone de bordure (9, 12), dans ces zones de bordures (9, 12), étant supérieure à la proportion de surface de liaison sur la surface de zone centrale, à l'intérieur de la zone centrale (10, 11).

2. Feuille composite selon la revendication 1, caractérisée en ce que les zones de bordure (9, 12) sont prévues sur les bords de flancs s'étendant dans la direction longitudinale de la bande continue.

3. Feuille composite selon la revendication 1 ou 2, caractérisée en ce que respectivement l'autre des bandes de feuille est formée au moins principalement de polypropylène à orientation biaxiale ou de verre cellulosique.

4. Feuille composite selon l'une des revendications 1 à 3, caractérisée en ce que la surface de liaison représente au plus 50% de la surface de la bande continue.

5. Feuille composite selon la revendication 4, caractérisée en ce que la surface de liaison représente plus de 5% de la surface de la bande continue.

6. Feuille composite selon l'une des revendications 1 à 5, caractérisée par des zones de bordure (9, 12) de la surface du flan, dans lesquelles la proportion de la surface de liaison sur la surface de zone de bordure (9, 12) représente au moins le quintuple de la proportion, définie à l'intérieur de la zone (10, 11), de la surface de liaison sur la surface de zone centrale.

7. Feuille composite selon la revendication 6, caractérisée en ce que la proportion de la surface de liaison sur la surface de zone de bordure (9, 12) est au moins le décuple de la proportion, définie à l'intérieur de la zone centrale (10, 11), de la surface centrale.

8. Feuille composite selon la revendication 6 ou 7, caractérisée en ce que les deux bandes de feuille situées dans la zone centrale ne sont pas reliées entre elle.

9. Feuille composite selon l'une des revendications 1 à 8, caractérisée en ce que, dans les zones de bordure (9, 12) de la surface de flan, la proportion de la surface de liaison sur la surface de zone de bordure est d'au moins 75%.

10. Feuille composite selon l'une des revendications 1 à 9, caractérisée par des zones de bordure (9, 12) de la surface de flan, dont les largeurs moyennes respectives sont d'au moins 10 mm.

11. Feuille composite selon l'une des revendications 1 à 10, caractérisée en ce que la zone centrale (10, 11) de la surface du flan présente des dimensions telles que lors de l'utilisation du flan comme matériau d'emballage rigide, modulaire, cette zone centrale (10, 11) recouvre au moins une majeure partie de la surface ou d'une face de la surface du produit intéressé.

12. Utilisation d'un flan composé d'une feuille composite selon l'une des revendications 1 à 11, caractérisée en ce qu'il est utilisé pour la fabrication d'emballages à enveloppement ou enroulement.

13. Utilisation selon la revendication 12, caractérisée en ce qu'il est utilisé pour la fabrication d'un emballage à torsion.

14. Utilisation d'un flan composé d'une feuille composite selon l'une des revendications 1 à 10, caractérisée en ce qu'il est utilisé comme étiquette.

*Fig. 1*

*Fig. 2* (II-II)

*Fig. 3*

7    4    3;3'

3;3'

20 mm

5

5 mm

6

7

6

9    10    9

*Fig. 4*

13    4    3;3'

7

6

6

5

7    13

12    11    12